## Europäisches Patentamt
## European Patent Office
## Office européen des brevets

(11) Veröffentlichungsnummer: **0 002 252**
**B1**

(12) **EUROPÄISCHE PATENTSCHRIFT**

(45) Veröffentlichungstag der Patentschrift: **27.05.81**

(21) Anmeldenummer: **78101478.2**

(22) Anmeldetag: **30.11.78**

(51) Int. Cl.³: **C 09 D  5/02,** C 09 D  3/64, C 08 L  67/08

(54) Wässrige Dispersionen von als Überzugsmittel bzw. Lackbindemittel geeigneten Harzen.

(30) Priorität: **05.12.77 DE 2754141**

(43) Veröffentlichungstag der Anmeldung:
**13.06.79 Patentblatt 79/12**

(45) Bekanntmachung des Hinweises auf die Patenterteilung:
**27.05.81 Patentblatt 81/21**

(84) Benannte Vertragsstaaten:
**BE CH FR GB NL SE**

(56) Entgegenhaltungen:
**US - A - 3 761 433**

(73) Patentinhaber: **Henkel Kommanditgesellschaft auf Aktien**
**-Patentabteilung- Postfach 1100 Henkelstrasse 67**
**D-4000 Düsseldorf 1 (DE)**

(72) Erfinder: **Eschwey, Helmut, Dr.**
**Leitenstorffer Strasse 24**
**D-4000 Düsseldorf 13 (DE)**
Erfinder: **Galinke, Joachim, Dr.**
**Falkenweg 6**
**D-4018 Langenfeld (DE)**
Erfinder: **Wiemers, Norbert, Dr.**
**Humboldtstrasse 51**
**D-4010 Monheim-Baumberg (DE)**

Courier Press, Leamington Spa, England.

# 0 002 252

## Wäßrige Dispersionen von als Überzugsmittel bzw. Lackbindemittel geeigneten Harzen

Die vorliegende Erfindung betrifft wäßrige Dispersionen von als Überzugsmittel bzw. Lackbindemittel geeigneten lufttrocknenden Harzen, die unter Einwirkung von Sauerstoff, insbesondere Luftsauerstoff, eventuell unterstützt durch Siccative, in den vernetzten Zustand überführt werden können und sich durch vorteilhafte physikalische und chemische Eigenschaften auszeichnen.

Es ist bekannt, zur Herstellung wäßriger Lackbindemittel Alkydharze mit hohen Säurezahlen zu verwenden, die in Form ihrer Aminsalze gute Wasserlöslichkeit aufweisen. Die Nachteile derartiger Systeme sind, abgesehen von der häufig unbefriedigenden Wasserbeständigkeit, in einem im allgemeinen erheblichen Gehalt an flüchtigen Aminen und Hilfslösemitteln zu sehen.

Es ist ferner bekannt, die Lackbindemittel durch den Einbau hydrophiler Ketten, insbesondere Polyäthylenglykolketten, so zu modifizieren, daß selbstemulgierende Alkydharze resultieren. Außerdem kann man auch ohne Einbau in das Harzmolekül selbst Polyglykolätherderivate, wie etwa die Addukte von Äthylenoxid an Fettalkohole, als neidermolekulare, nichtionische Emulgatoren einsetzen.

In beiden Fällen verbleibt aber der hydrophile Rest unverändert aktiv in der Lackschicht und verursacht aufgrund seiner Hydrophile Anfälligkeit gegenüber Wasser. Zudem tritt häufig eine deutliche Verzögerung der Filmtrocknung und eine Erniedrigung der zu erreichenden Filmhärte ein.

Aufgabe der vorliegenden Erfindung war es daher, solche wäßrigen Lacksysteme zu finden, die sich gegenüber dem bekannten Stand der Technik durch verbesserte Eigenschaften, insbesondere hinsichtlich der Wasseranfälligkeit, Trocknungsgeschwindigkeit und Filmhärte, auszeichnen.

Die Aufgabe wurde erfindungsgemäß gelöst durch wäßrige Dispersionen von als Überzugsmittel beziehungsweise Lackbindemittel geeigneten Harzen, bestehend aus lufttrocknenden Alkydharzen, Additionsprodukten des Äthylenoxids an Fettalkohole, Fettsäuren, Fettamine, Fettsäureamide oder Alkylphenole als nichtionogene oberflächenaktive Substanzen und gegebenenfalls weiteren üblichen Hilfsstoffen, dadurch gekennzeichnet, daß sie als nichtionogene oberflächenaktive Substanzen Additionsprodukte des Äthylenoxids und Allylglycidyläthers an Fettalkohole, Fettsäuren, Fettamine, Fettsäureamide oder Alkylphenole mit 8 bis 26 Kohlenstoffatomen in einer Menge von 0,5 bis 10, bezogen auf den Harzanteil, enthalten, wobei auf 1 Mol der vorgenannten Verbindungen

a) 2 bis 10 Allylglycidyläthereinheiten sowie
b) 5 bis 25 Äthylenoxideinheiten entfallen.

Nach einer bevorzugten Ausführungsform sind die wäßrigen Dispersionen dadurch gekennzeichnet, daß sie die oberflächenaktiven Substanzen in einer Menge von 1 bis 8 Gewichtsprozent, bezogen auf den Harzanteil, enthalten.

Die Überzugsmittel entsprechend dem Stand der Technik werden erfindungsgemäß in verschiedenen Richtungen verbessert. Dabei tritt eine unvorhergesehene Wirkung hinsichtlich der Qualität der erzeugbaren Überzüge ein. Diese Verbesserung wird dadurch erreicht, daß nicht beliebige, ungesättigte Stellen in das Molekül des Emulgators eingeführt werden, sondern ganz bestimmte definierte Allylgruppen. Es war bisher nicht üblich, Emulgatoren überhaupt in dieser Richtung zu modifizieren. Der erreichte technische Effekt war daher vom Fachmann nicht voraussehbar.

Demnach kommen beispielsweise die aus natürlichen Fetten herstellbaren Fettsäuren als Ausgangskomponente in Frage, die etwa 8 bis 22, insbesondere 12 bis 18 Kohlenstoffatome enthalten. Sie können auch Doppelbindungen enthalten und werden meist als Gemische eingesetzt. Selbstverständlich können auch synthetische Fettsäuren verwendet werden, die noch Verzweigungen enthalten. Die als Ausgangssubstanzen zur Herstellung der nichtionogenen speziellen oberflächenaktiven Substanzen eignen sich ferner Fettalkohole, gegebenenfalls solche mit Doppelbindungen der gleichen Kettenlänge von 8 bis 22, insbesondere 12 bis 18 Kohlenstoffatomen. Derartige Fettalkohole werden bekanntlich aus den Estern der vorstehend erwähnten natürlichen Fettsäure durch Reduktion gewonnen. Natürlich können auch sogenannte Oxoalkohole eingesetzt werden. Hinsichtlich der weiterhin verwendbaren Fettamine und Fettsäureamide gilt bezüglich der Kettenlänge das gleiche wie für die Fettsäure. Sie werden durch bekannte Reaktionen aus ihnen hergestellt. Unter den Alkylphenolen sind solche bevorzugt, die 6 bis 12 Kohlenstoffatome im Alkylrest enthalten und sich von Phenol selbst ableiten.

Die Addition der Epoxidverbindungen an die vorstehend genannten hydrophoben Verbindungen erfolgt in bekannter Weise unter katalytischem Einfluß von Alkalien, insbesondere Alkalialkoholaten, wie Natrium- oder Kaliummethylat oder -butylat. Im allgemeinen verwendet man ein Gemisch der beiden Epoxidverbindungen. Der hydrophile Rest der oberflächenaktiven Substanzen kann in bezug auf die Äthylenoxid- und Allylglycidyläthereinheiten sowohl eine blockartige als auch eine beliebige andere statistische Verteilung aufweisen.

Zur Herstellung der erfindungsgemäßen Dispersionen selbst werden die Emulgatoren zweckmäßig in einer Menge von etwa 0,5 bis 10, insbesondere von 1 bis 8 Gewichtsprozent, bezogen auf den gesamten Harzanteil, eingesetzt.

Als Lackbindemittel können solche Alkydharze eingesetzt werden, die durch Aminneutralisation

2

allein nicht in wasserlösliche oder wasserverdünnbare Form überführt werden können, also solche, die üblicherweise in organischen Lösungsmitteln eingesetzt werden. Diese Alkydharze sollen eine Säurezahl von etwa 5 bis 40, vorzugsweise eine Säurezahl von 5 bis 25 aufweisen. Ihr Fettsäuregehalt soll, wie bei lufttrocknenden Alkydharzen allgemein üblich, zwischen 25 und 80, vorzugsweise zwischen 45 und 70 Gewichtsprozent, berechnet als Fettsäureglyzerid, betragen. Im allgemeinen wird so veil an Harz eingesetzt, daß die fertige Dispersionen einen Harzfeststoffgehalt von etwa 30 bis 70 Gewichtsprozent aufweist.

Die Herstellung der Dispersionen erfolgt nach konventionellen Dispergier- bzw. Emulgierverfahren bei Temperaturen zwischen etwa 20°C und 100°C, gegebenenfalls unter Druck bei Temperaturen über 100°C. Dabei können auch in untergeordneter Menge bestimmte wassermischbare bzw. zumindest teilweise in Wasser lösliche Lösungsmittel wie Äthylenglykolmonobutyläther oder Butanol oder dergleichen mitverwendet werden. Ebenso kann es zweckmäßig sein, eine untergeordnete Menge nicht mit Wasser mischbarer organischer Lösungsmittel wie Testbenzin oder Xylol mitzuverwenden. Da die genannten Lösungsmittel in erster Linie als Verlaufshilfsmittel dienen, wird ihr Anteil 15 Gewichtsprozent, insbesondere aber 10 Gewichtsprozent, bezogen auf die fertige Dispersion, nicht übersteigen. Ferner kann es zweckmäßig sein, geringe Mengen an flüchtigen basischen Stickstoffverbindungen wie Ammoniak, Triäthylamin oder Dimethyläthanolamin zuzusetzen. Ihre Menge sollte aber 2 Gewichtsprozent, bezogen auf die fertige Dispersion, nicht übersteigen.

Bei den erfindungsgemäßen Dispersionen handelt es sich um Öl-in-Wasser-Emulsionen, die unbegrenzt mit Wasser verdünnbar sind. Im Gegensatz zu zahlreichen bekannten wasserverdünnbaren, aminneutralisierten Systemen zeigen die erfindungsgemäßen Dispersionen auch in Abwesenheit organischer Hilfslösungsmittel kein Maximum in der Verdünnungskurve, d.h. keine Viskositätsanomalie (vergl. z.B. E. Hüttmann et al., Plaste und Kautschuk 17 (1970) 202).

Die erfindungsgemäßen Dispersionen können nach herkömmlichen Methoden pigmentiert und mit Siccativen versetzt werden. In Abwesenheit organischer Hilfslösungsmittel gelangen vorteilhafterweise wasserlösliche bzw. handelsübliche wasseremulgierbare Trockenstoffe zum Einsatz; in Gegenwart unpolarer organischer Hilfslösungsmittel können ebenso konventionelle Metallsalze wie Naphthenate und/oder Octoate von Schwermetallen wie Blei und Kobalt oder dergleichen eingesetzt werden.

Die Dispersionen können zum Überziehen der verschiedensten Materialien wie Holz, Glas oder Metalle u.w. mehr verwendet werden. Nach der Lufttrocknung zeichnen sich die Überzüge durch ihre verbesserte Wasserbeständigkeit sowie durch ihre hohe Härte aus. In der Wasserbeständigkeit sind sie sowohl den herkömmlichen Emulsionen auf Basis nichtreaktiver Emulgatoren als auch den wasserverdünnbaren aminneutralisierten Systemen hoher Säurezahl deutlich überlegen. Hervorzuheben sind auch die Vorteile, die durch das Fehlen bzw. den äußerst geringen Gehalt an flüchtigen organischen Lösungsmitteln und flüchtigen Aminen bzw. Ammoniak gegeben sind.

Beispiele

Zur Herstellung der erfindungsgemäßen Dispersionen wurden die folgenden mit I—III bezeichneten Alkydharze verwendet.

Alkydharz I

Tallölmodifiziertes Alkydharz mit einem Ölgehalt von 66 Gewichtsprozent, einem Phthalsäureanhydridgehalt von 24 Gewichtsprozent sowie einer Säurezahl von 10.

Alkydharz II

Leinölmodifiziertes Alkydharz mit einem Ölgehalt von 50 Gewichtsprozent, einem Phthalsäureanhydridgehalt von 32 Gewichtsprozent sowie einer Säurezahl von 10.

Alkydharz III

Sojaölmodifiziertes Alkydharz mit einem Ölgehalt von 60 Gewichtsprozent, einem Phthalsäureanhydridgehalt von 28 Gewichtsprozent sowie einer Säurezahl von 12.

Vergleichsalkydharz

(Vergleich gegenüber dem Stand der Technik)

Mit pflanzlichen Fettsäuren modifiziertes Alkydharz mit einem Ölgehalt von 50 Gewichtsprozent, einem Phthalsäureanhydridgehalt von 19 Gewichtsprozent sowie einer Säurezahl von 48. Vergleichsalkydharz a lag vor als 63%ige Lösung in Äthylenglykolmonobutyläther.

Zur Herstellung der Dispersionen wurden die folgenden Emulgatoren verwendet, die in bekannter Weise hergestellt worden sind. Dazu wurden die Epoxidverbindungen mit dem vorgelegten Fettalkohol, Phenol bzw. Fettamin unter Stickstoff mittels zwei Gewichtsprozent Natriummethylat, bezogen auf Phenol im Autoklaven umgesetzt. Entweder wurden Gemische verwendet oder die Reaktionskomponenten nacheinander zudosiert. Die reaktionszeit betrug in allen Fällen 6 Stunden.

**0 002 252**

### Emulgator A

Umsetzungsprodukt von 1 Mol Nonylphenol mit einem Gemisch aus 3 Mol Allylglycidyläther und 15 Mol Äthylenoxid bei 165°C und 15 atü.

### Emulgator B

Umsetzungsprodukt von 1 Mol Nonylphenol mit einem Gemisch aus 7 Mol Allylglycidyläther und 20 Mol Äthylenoxid bei 165°C und 15 atü.

### Emulgator C

Umsetzungsprodukt von 1 Mol Hexadecylalkohol mit a) 20 Mol Äthylenoxid und b) 5 Mol Allylglycidyläther bei 165°C und 15 atü.

### Emulgator D

Umsetzungsprodukt von 1 Mol Decylamin mit a) 3 Mol Allylglycidyläther und b) 10 Mol Äthylenoxid bei 140°C und 10 atü.

### Emulgator E

Umsetzungsprodukt von 1 Mol Nonylphenol mit einem Gemisch aus 5 Mol Allylglycidyläther und 20 Mol Äthylenoxid bei 165°C und 16 atü.

Zu Vergleichszwecken wurde folgender handelsüblicher Emulgator herangezogen:

### Vergleichsemulgator

Umsetzungsprodukt von 1 Mol Nonylphenol mit 15 Mol Äthylenoxid bei 165°C und 16 atü.

### Herstellung der Dispersionen

Alkydharz, Emulgator, Wasser, Stickstoffbase und gegebenenfalls das organische Hilfslösungsmittel wurden vorgelegt und auf 80°C erwärmt. Dann wurde unter Verwendung eines hochtourigen Rührers (10 000 Upm) dispergiert. Bei Raumtemperatur wurden die Dispersionen mit den bei konventionellen Alkydharzen üblichen Mengen Cobalt- und Bleisiccativ versetzt. Eingesetzt wurden, bezogen auf 100 Gewichtsteile Festharz 0,1 g Cobaltnaphthenat und 0,9 g Bleinaphthenat, berechnet als Metall. Die erfindungsgemäßen Dispersionen, die sich beliebig mit Wasser verdünnen ließen, hatten folgende Zusammensetzung:

### Beispiel 1

| | |
|---|---|
| Alkydharz 1 | 49,0 Gew. T. |
| Emulgator A | 1,0 „ „ |
| Triäthylamin | 1,0 „ „ |
| Testbenzin (145—200°C Siedebereich) | 5,0 „ „ |
| Wasser | 44,0 „ „ |

### Beispiel 2

| | |
|---|---|
| Alkydharz 1 | 39,0 Gew. T. |
| Emulgator B | 1,0 „ „ |
| Wäßriges Ammoniak 36 Gew.%NH$_3$ | 1,0 „ „ |
| Testbenzin 145—200 | 10,0 „ „ |
| Wasser | 49,0 „ „ |

### Beispiel 3

| | |
|---|---|
| Alkydharz 2 | 58,5 Gew. T. |
| Emulgator C | 1,5 „ „ |
| Triäthylamin | 1,5 „ „ |
| Testbenzin (145—200°C Siedebereich) | 10,0 „ „ |
| Wasser | 28,5 „ „ |

4

## Beispiel 4

| | |
|---|---|
| Alkydharz 2 | 49,0 Gew. T. |
| Emulgator D | 1,0 „ „ |
| Triäthylamin | 1,0 „ „ |
| Wasser | 49,0 „ „ |

## Vergleichsbeispiel i

| | |
|---|---|
| Alkydharz 1 | 49,0 Gew. T. |
| Vergleichsemulgator a | 1,5 „ „ |
| Triäthylamin | 1,0 „ „ |
| Testbenzin (145—200°C Siedebereich) | 15,0 „ „ |
| Wasser | 33,5 „ „ |

## Vergleichsbeispiel ii

| | |
|---|---|
| Vergleichsalkydharz | 50,0 Gew. T. |
| Triäthylamin | 4,5 „ „ |
| Äthylenglykolmonobutyläther | 29,0 „ „ |
| Wasser | 16,5 „ „ |

Zur Prüfung der mittels der Dispersionen herstellbaren Filme wurden dieselben auf Glasplatten aufgestrichen und 7 Tage lang im Klimaraum bei 20°C und 60% relativer Luftfeuchtigkeit gelagert. Die Trockenfilmdicke betrug 30 $\mu$m. Die Bestimmung der Filmhärte erfolgte in Abständen von 24 Stunden durch Messung der Pendelhärte nach DIN 53 157.

Zur Ermittlung der Wasserbeständigkeit wurden die 7 Tage getrockneten Filme bei 40°C in destilliertes Wasser eingetaucht und im Abstand von 1, 5, 10 und 24 Stunden hinsichtlich Bläschenbildung und Ablöseerscheinungen beurteilt. Die Beurteilung erfolgte nach einem 5-Punkte-System:

1 Film unverändert
2 beginnende Bläschenbildung am Rand
3 leichte Bläschenbildung auf der gesamten Filmfläche
4 starke Bläschenbildung auf der gesamten Filmfläche
5 Film ist vom Untergrund abgelöst.

In der nachfolgenden Tabelle ist in Abhängigkeit vom Beispiel die Pendelhärte und das Verhalten gegenüber destilliertem Wasser gemäß vorstehendem Schema angegeben.

**0 002 252**

| Beispiel | Pendelhärte (sec) (DIN 53 157) | | | Wasserbeständigkeit | | | |
|---|---|---|---|---|---|---|---|
| | 1 Tag | 3 Tage | 7 Tage | 1h | 5h | 10h | 24h |
| 1 | 25 | 40 | 55 | 1 | 1 | 1–2 | 2–3 |
| 2 | 24 | 38 | 52 | 1 | 1 | 1 | 2 |
| 3 | 26 | 40 | 54 | 1 | 1 | 1–2 | 2–3 |
| 4 | 25 | 39 | 55 | 1 | 1 | 1–2 | 2–3 |
| 5 | 23 | 35 | 52 | 1 | 1 | 1 | 2 |
| Vergleich i | 18 | 25 | 39 | 1 | 2 | 3 | 4 |
| Vergleich ii | 25 | 40 | 54 | 1 | 2–3 | 4 | 5 |

## Patentansprüche

1. Wäßrige Dispersionen von als Überzugsmittel beziehungsweise Lackbindemittel geeigneten Harzen, bestehend aus lufttrocknenden Alkydharzen, Additionsprodukten des Äthylenoxids an Fettalkohole, Fettsäuren, Fettamine, Fettsäureamide oder Alkylphenole als nichtionogene oberflächenaktive Substanzen und gegebenenfalls weiteren üblichen Hilfsstoffen, dadurch gekennzeichnet, daß sie als nichtionogene oberflächenaktive Substanzen Additionsprodukte des Äthylenoxids und Allylglycidyläthers an Fettalkohole, Fettsäuren, Fettamine, Fettsäureamide oder Alkylphenole mit 8 bis 26 Kohlenstoffatomen in einer Menge von 0,5 bis 10, bezogen auf den Harzanteil, enthalten, wobei auf 1 Mol der vorgenannten Verbindungen

a) 2 bis 10 Allylglycidyläthereinheiten sowie
b) 5 bis 25 Äthylenoxideinheiten entfallen.

2. Wäßrige Dispersionen nach Anspruch 1, dadurch gekennzeichnet, daß sie die oberflächenaktiven Substanzen in einer Menge von 1 bis 8 Gewichtsprozent, bezogen auf den Harzanteil, enthalten.

## Revendications

1. Dispersions aqueuses de résines appropriées comme agents de revêtement ou comme agents liants de vernis, ces dispersions étant constituées de résines alkydes séchant à l'air, de produits d'addition d'oxyde d'éthylène à des alcools gras, des acides gras, des amines grasses, des amides d'acides gras ou des alkyl-phénols comme substances tensioactives non ionogènes, ainsi qu'éventuellement d'autres substances auxiliaires habituelles, caractérisées en ce que, comme substances tensio-actives non ionogènes, elles contiennent des produits d'addition d'oxyde d'éthylène et d'éther allyl-glycidylique à des alcools gras, des acides gras, des amines grasses, des amides d'acides gras ou des alkyl-phénols contenant 8 à 26 atomes de carbone, en une quantité de 0,5 à 10% en poids, calculés sur la quantité de résine tandis que, pour 1 mole des composés précités, on a:

a) 2 à 10 motifs d'éther allyl-glycidylique, ainsi que
b) 5 à 25 motifs d'oxyde d'éthylène.

2. Dispersions aqueuses suivant la revendication 1, caractérisées en ce qu'elles contiennent les substances tensio-actives en une quantité de 1 à 8% en poids, calculés sur la quantité de résine.

## Claims

1. Aqueous dispersions of resins suitable for use as coating compositions or lacquer binders, consisting of air-drying alkyd resins, addition products of ethylene oxide with fatty alcohols, fatty acids, fatty amines, fatty acid amides or alkyl phenols as nonionic surface-active substances and, optionally,

6

other standard auxiliaries, characterised in that they contain as nonionic surface-active substances addition products of ethylene oxide and allyl glycidyl ether with fatty alcohols, fatty acids, fatty amines, fatty acid amides or alkyl phenols containing from 8 to 26 carbon atoms in a quantity of from 0.5 to 10% by weight, based on the resin content,

a) from 2 to 10 allyl glycidyl ether units and

b) from 5 to 25 ethylene oxide units, being present per mole of the above-mentioned compounds.

2. Aqueous dispersions as claimed in Claim 1, characterised in that they contain the surface-active substances in a quantity of from 1 to 8% by weight, based on the resin content.